## Europäisches Patentamt

## European Patent Office

## Office européen des brevets

(19)

(11) Veröffentlichungsnummer: **0 235 358**
**B1**

(12) **EUROPÄISCHE PATENTSCHRIFT**

(45) Veröffentlichungstag der Patentschrift:
08.08.90

(51) Int. Cl.⁵: **G01P 5/12**, G01F 1/68,
G01P 5/10

(21) Anmeldenummer: 86115531.5

(22) Anmeldetag: 08.11.86

(54) Anordnung zur Messung der Strömungsgeschwindigkeit.

(30) Priorität: 03.03.86 DE 3606851

(43) Veröffentlichungstag der Anmeldung:
09.09.87 Patentblatt 87/37

(45) Bekanntmachung des Hinweises auf die Patenterteilung:
08.08.90 Patentblatt 90/32

(84) Benannte Vertragsstaaten:
DE FR GB IT SE

(56) Entgegenhaltungen:
DE-A- 3 430 075
DE-A- 3 515 206
DE-A- 3 516 794
FR-A- 2 532 420
GB-A- 1 488 012
GB-A- 2 138 566

(73) Patentinhaber: VDO Adolf Schindling AG,
Gräfstrasse 103, D-6000 Frankfurt/Main 90(DE)

(72) Erfinder: Porth, Wolfgang, Röhrborngasse 70,
D-6000 Frankfurt am Main 60(DE)
Erfinder: Weibler, Wolfgang, Dr., Vor der Heide 14,
D-6238 Hofheim a.T(DE)

(74) Vertreter: Klein, Thomas, Dipl.-Ing. (FH), Sodener
Strasse 9 Postfach 6140, D-6231 Schwalbach a. Ts.(DE)

ACTORUM AG

## Beschreibung

Die Erfindung betrifft eine Anordnung zur Messung der Strömungsgeschwindigkeit von Medien, insbesondere der Ansaugluft von Brennkraftmaschinen, mit einer elektrisch beheizbaren Widerstandsschicht, welche isoliert auf einem Träger aufgebracht ist und mit dem strömenden Medium in Wärmekontakt steht, wobei der Träger rechteckig mit einem die Widerstandsschicht tragenden plattenförmigen Mittelteil ausgebildet und an mindestens drei Seiten einstückig mit Verstärkungsleisten und das Mittelteil an seinen Rändern mit an die Verstärkungsleisten angrenzenden Schlitzen versehen ist.

Aus der DE-A 3 516 794 ist eine Gasströmungsmeßvorrichtung bekannt, deren direkt beheizter Sensor zur Bestimmung des Durchsatzes der in eine Brennkraftmaschine eingesaugten Luft verwandt wird und der der Anordnung nach dem ersten Teil des zweigeteilten Patentanspruchs 1 entspricht. Ein ähnlich aufgebauter thermischer Massenflußsensor ist in der GB-A 2 138 566 beschrieben.

An derartige Sensoren werden eine Reihe von teilweise widerstrebenden Anforderungen gestellt. So ist beispielsweise für eine ausreichend hohe Ansprechempfindlichkeit ein guter Wärmeübergang zwischen dem strömenden Medium und der Widerstandsschicht erforderlich. Um diesen zu gewährleisten, wird das strömende Medium auf beiden Seiten der Widerstandsschicht bzw. des Trägers vorbeigeführt, was jedoch nur entsprechend wirksam ist, wenn der Träger gut wärmeleitend bzw. entsprechend dünn ist. Dabei bewirkt eine hohe Temperaturleitzahl des Trägermaterials einen schnellen Temperaturausgleich auf dem Träger, der einer geringen Ansprechzeit zugutekommt.

Außerdem sind an die thermische und mechanische Stabilität derartiger Sensoren hohe Anforderungen zu stellen. Schließlich ist eine preiswerte Herstellbarkeit erforderlich, zu der eine einfache Montierbarkeit beiträgt.

Aufgabe der vorliegenden Erfindung ist es, eine Anordnung zur Messung der Strömungsgeschwindigkeit und des Massendurchsatzes derart weiterzubilden, daß die oben genannten Forderungen weitgehend erfüllt sind.

Die erfindungsgemäße Anordnung ist dadurch gekennzeichnet, daß zwei gegenüberliegende Verstärkungsleisten über eine von ihnen eingeschlossene dritte Verstärkungsleiste hinausragen und ein weiteres plattenförmiges Teil tragen, auf welchem eine weitere Widerstandsschicht aufgebracht ist, und daß das weitere plattenförmige Teil an seinen die Verstärkungsleisten berührenden Rändern mit Schlitzen versehen ist. Diese Weiterbildung gewährleistet eine günstige Anordnung des auch bei bekannten Anordnungen vorhandenen Temperatursensors. Dabei liegt die weitere Widerstandsschicht - in Strömungsrichtung gesehen - vor der beheizbaren Widerstandsschicht. Durch diese Weiterbildung ist eine gute thermische Entkopplung beider Sensoren gegeben.

Eine Weiterbildung der Erfindung ist dadurch gekennzeichnet, daß ein drittes plattenförmiges Teil auf der von der dritten Verstärkungsleiste abgewandten Seite des Mittelteils angeordnet ist und von dem Mittelteil durch einen weiteren Schlitz getrennt ist. Auf dem dritten plattenförmigen Teil ist ein dritter temperaturabhängiger Widerstand angeordnet, welcher zur Erfassung der Strömungsrichtung verwendet werden kann. Bei Brennkraftmaschinen kann es nämlich vorkommen, daß sich die Strömungsrichtung kurzzeitig umkehrt, wodurch die von dem beheizbaren Widerstand erwärmte Luft zum Temperatursensor gerät, was Fehlmessungen zur Folge hat. Durch einen Vergleich der Widerstandswerte des Temperatursensors und des dritten Widerstandes kann die Strömungsrichtung festgestellt und bei falscher Strömungsrichtung eine Weitergabe des Meßwertes unterbunden werden.

Bei bekannten Anordnungen zur Messung der Strömungsgeschwindigkeit hat sich herausgestellt, daß die Wärmeübergangszahl zwischen der Widerstandsschicht und dem strömenden Medium an der der Strömung entgegengesetzten Kante der Anordnung am größten ist und in Strömungsrichtung abnimmt. Dadurch entsteht innerhalb der Widerstandsschicht ein Temperaturgradient, was wiederum zu einer Verminderung der Ansprechgeschwindigkeit führt.

Dieser Nachteil wird bei einer anderen Weiterbildung der Erfindung dadurch vermieden, daß auf der Widerstandsschicht dem Träger und auf der von der Widerstandsschicht abgewandten Seite des Trägers Schichten mit niedriger Wärmeleitfähigkeit derart aufgebracht sind, daß die örtliche Wärmeübergangszahl zwischen dem strömenden Medium und der Widerstandsschicht in Strömungsrichtung mindestens angenähert konstant ist. Dabei kann die Stärke der Schicht in Strömungsrichtung kontinuierlich oder stufenweise abnehmen.

Die Erfindung läßt zahlreiche Ausführungsformen zu. Einige davon sind schematisch in der Zeichnung an Hand mehrerer Figuren dargestellt und nachfolgend beschrieben. Es zeigt:

Fig. 1 eine Ansicht und einen Schnitt eines Ausführungsbeispiels mit einer Widerstandsschicht,

Fig. 2 eine Ansicht eines Ausführungsbeispiels mit zwei zusätzlichen Widerstandsschichten,

Fig. 3 und Fig. 4 jeweils ein Schnitt durch den Träger und die aufgebrachten Schichten für verschiedene Weiterbildungen der Erfindung.

Gleiche Teile sind in den Figuren mit gleichen Bezugszeichen versehen.

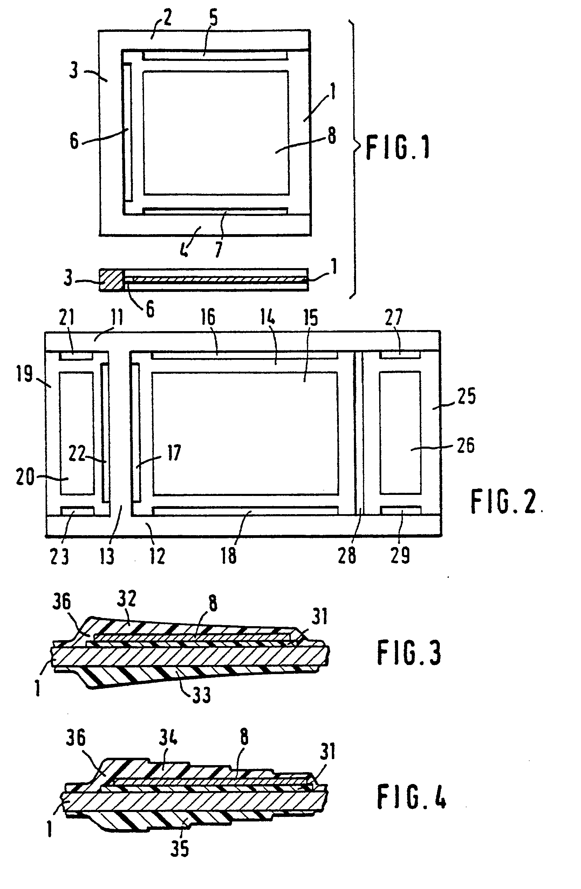

Bei der Anordnung nach Fig. 1 ist ein plattenförmiges Mittelteil 1, dessen Stärke etwa 0,1 mm beträgt, an drei Seiten mit je einer Verstärkungsleiste 2, 3, 4 versehen. Der gesamte Körper ist aus einem Stück hergestellt. Zur Herstellung der Anordnung nach Fig. 1 sind verschiedene Verfahren, insbesondere mikromechanische Verfahren, geeignet. Wie eingangs erwähnt eignet sich als Material insbesondere Silizium, das in vorteilhafter Weise durch anisotropes Ätzen in die gezeigte Form gebracht werden kann. Hierzu wird eine Siliziumscheibe mit der Stärke der Verstärkungsleisten und der erforderlichen Fläche mit Masken, welche die Randbereiche abdecken, versehen und solange der Ätzflüssigkeit ausgesetzt, bis das Mittelteil genügend dünn ist. Dabei kann der Ätzvorgang von beiden Seiten erfolgen, so daß die im Schnitt dargestellte Anordnung entsteht. Es ist jedoch auch möglich, nur einseitig Material abzutragen, so daß das Mittelteil 1 beispielsweise mit der unteren Kante der Verstärkungsleisten abschließt.

Zur Verringerung der Wärmeleitung zwischen dem Mittelteil 1 und den Verstärkungsleisten 2, 3, 4 sind Schlitze 5, 6, 7 vorgesehen, die beispielsweise mittels Laserschneiden hergestellt werden.

Auf das Mittelteil 1 wird eine den eigentlichen Sensor darstellende Widerstandsschicht 8 aufgebracht, was im Zusammenhang mit den Figuren 3 und 4 noch näher erläutert wird.

Bei dem Ausführungsbeispiel nach Fig. 2 sind die Verstärkungsleisten 11, 12 über die von ihnen eingeschlossene Verstärkungsleiste 13 hinaus verlängert. Das bei dem Ausführungsbeispiel nach Fig. 2 etwas größere Mittelteil 14 trägt die Widerstandsschicht 15. Ferner sind ebenfalls Schlitze 16, 17 und 18 vorgesehen. Zwischen den nach links herausragenden Verstärkungsleisten 11, 12 ist ein weiteres plattenförmiges Teil 19 angeordnet, auf welches eine weitere Widerstandsschicht 20 aufgebracht ist. Zur Verringerung der Wärmeleitung sind wiederum Schlitze 21, 22, 23 vorgesehen. Die Widerstandsschicht 20 wird als Temperatursensor benutzt und liegt deshalb vor der Widerstandsschicht 15 - in Strömungsrichtung gesehen. Beide Widerstandsschichten sind in an sich bekannter Weise Teil einer Brückenschaltung, an welche ein Differenzverstärker angeschlossen ist. Derartige Schaltungen sind hinreichend bekannt und brauchen im Rahmen dieser Erfindung nicht erläutert zu werden.

Bei dem in Fig. 2 dargestellten Ausführungsbeispiel ist ferner ein drittes plattenförmiges Teil 25 vorgesehen, auf welchem eine weitere Widerstandsschicht 26 angeordnet ist. Gegenüber den Verstärkungsleisten 11, 12 und dem Mittelteil 14 wird der Wärmefluß durch Schlitze 27, 28 und 29 herabgesetzt. Wie eingangs erläutert kann der dritte Widerstand 26 zur Erkennung der Strömungsrichtung benutzt werden.

In den Figuren 3 und 4 sind insbesondere die Schichtstärken vergrößert dargestellt.

Für den Träger 1 kann an sich Silizium verwendet werden, welches nicht über den für elektronische Bauelemente benötigten hohen Reinheitsgrad verfügt. Es ist jedoch durchaus im Rahmen der Erfindung möglich, außer der Widerstandsschicht 8 auf dem Träger 1 weitere Widerstände und gegebenenfalls in monolitischer Technik die zugehörigen elektrischen Schaltungen aufzubauen. Zu letzterem ist jedoch entsprechend reines Silizium erforderlich.

Zur Isolierung des Trägers gegenüber der Widerstandsschicht 8 dient eine Passivierung 31, welche beispielsweise durch Nitrieren, Oxidieren oder Beschichten mit Glas oder Kunststoff hergestellt werden kann.

Zur Herstellung der Widerstandsschicht 8 wird auf die Passivierung 31 eine Schicht aus hochreinem Polysilizium aufgebracht, welche mit Hilfe von in der Halbleitertechnik bekannten Prozessen die erforderlichen elektrischen Eigenschaften erhält, von denen im folgenden lediglich einige Schritte erwähnt sind. Nach einer Rekristallisation mit Hilfe von Laser- oder Argon-Hochdruck-Licht erfolgt eine Ionenimplantation, womit der Temperaturkoeffizient der Widerstandsschicht in weiten Grenzen festgelegt werden kann. Dabei sind höhere Temperaturkoeffizienten als bei metallischen Widerstandsschichten möglich, wodurch eine höhere Empfindlichkeit und gegebenenfalls eine einfachere elektrische Schaltung möglich ist. Zur Anpassung an den jeweiligen Anwendungsfall kann der Temperaturkoeffizient jedoch auch geringer als technisch möglich gewählt werden.

Danach folgen eine Temperaturbehandlung zum Ausheilen des Kristalls sowie mehrere Schritte zum Herstellen der erforderlichen Struktur und schließlich die Kontaktierung. Die Struktur kann beispielsweise darin bestehen, daß die Widerstandsschicht 8 eine mäanderförmig verlaufende Leiterbahn bildet.

Nach der Herstellung der Widerstandsschicht 8 wird auf die Widerstandsschicht 8 und auf die entgegengesetzte Oberfläche des Trägers 1 eine Schutzschicht aufgebracht, welche die Anordnung gegenüber, insbesondere chemischen Einflüssen des zu messenden Mediums, schützt.

Gemäß einer Weiterbildung der Erfindung sind die Schutzschichten 32, 33 derart aufgebracht, daß die örtliche Wärmeübergangszahl zwischen dem strömenden Medium und der Widerstandsschicht 8 - in Strömungsrichtung gesehen - mindestens annähernd konstant ist. Ohne diese Maßnahme ist nämlich die örtliche Wärmeübergangszahl in der Nähe der Kante 36, welche der Luftströmung entgegensteht, am größten und nimmt mit zunehmender Entfernung von dieser Kante ab. Dadurch entsteht in Strömungsrichtung ein Temperaturgradient innerhalb der Widerstandsschicht, der von der Strömungsgeschwindigkeit abhängig ist und eine relativ große Ansprechzeit der bekannten Sensoren bedingt. Durch die in Strömungsrichtung geringer werdende Schichtstärke der Schichten 32 und 33 wird dieser Effekt ausgeglichen, so daß die Ansprechzeit verringert wird. Während bei der Anordnung nach Fig. 3 die Schichtstärke kontinuierlich abnimmt, verläuft die Stärke der Schichten 34 und 35 bei der Anordnung nach Fig. 4 stufenweise. Zur Herstellung der Schutzschichten sind Aufdampfverfahren oder Druckverfahren je nach Werkstoff geeignet.

**Patentansprüche**

1. Anordnung zur Messung der Strömungsgeschwindigkeit von Medien, insbesondere der Ansaugluft von Brennkraftmaschinen, mit einer elektrisch beheizbaren Widerstandsschicht. welche isoliert auf einem Träger aufgebracht ist und mit dem strömenden Medium in Wärmekontakt steht. wobei der Träger rechteckig mit einem die Widerstandsschicht (8) tragenden plattenförmigen Mittelteil (1) ausgebildet und an mindestens drei Seiten einstückig mit Verstärkungsleisten (2, 3, 4) und das Mittelteil (1) an seinen Rändern mit an die Verstärkungsleisten (2, 3, 4) angrenzenden Schlitzen (5, 6, 7) versehen ist, dadurch gekennzeichnet , daß zwei gegenüberliegende Verstärkungsleisten (11, 12) über eine von ihnen eingeschlossene dritte Verstärkungsleiste (13) hinausragen und ein weiteres plattenförmiges Teil tragen, auf welchem eine weitere Widerstandsschicht (20) aufgebracht ist, und daß das weitere plattenförmige Teil (19) an seinen die Verstärkungsleisten (11, 12, 13) berührenden Rändern mit Schlitzen (21, 22, 23) versehen ist.

2. Anordnung nach Anspruch 1, dadurch gekennzeichnet, daß ein drittes plattenförmiges Teil (25) auf der von der dritten Verstärkungsleiste (13) abgewandten Seite des Mittelteils (14) angeordnet ist und von dem Mittelteil (15) durch einen weiteren Schlitz (28) getrennt ist.

3. Anordnung nach Anspruch 2, dadurch gekennzeichnet, daß die weitere Widerstandsschicht (19) als Temperaturfühler und die dritte Widerstandsschicht (25) zur Bestimmung der Strömungsrichtung dient.

4. Anordnung nach Anspruch 1, dadurch gekennzeichnet, daß auf der Widerstandsschicht (8) und auf der von der Widerstandsschicht abgewandten Seite des Trägers (1) Schichten (32, 33, 34, 35) mit niedriger Wärmeleitfähigkeit derart aufgebracht sind, daß die örtliche Wärmeübergangszahlung zwischen dem strömenden Medium und der Widerstandsschicht (8) in Strömungsrichtung mindestens angenähert konstant ist.

5. Anordnung nach Anspruch 4, dadurch gekennzeichnet, daß die stärke der Schichten (32, 33) in Strömungsrichtung kontinuierlich abnimmt.

6. Anordnung nach Anspruch 4, dadurch gekennzeichnet, daß die Stärke der Schichten (34, 35) in Strömungsrichtung stufenweise abnimmt.

**Claims**

1. Arrangement for measuring the full velocity of media, in particular the intake air of internal combustion engines, comprising an electrically heatable resistive zone which is applied in an insulated manner to a substrate and is in thermal contact with the flowing medium, in which arrangement the substrate is of rectangular design with a plate-shaped centre part (1) carrying the resistive film (8) and, at least at three sides, is provided in one piece with reinforcing strips (2, 3, 4), and a centre part (1), at its margins, is provided with slots (5, 6, 7) adjoining the reinforcing strips (2, 3, 4), characterized in that two opposite reinforcing strips (11, 12) project beyond a third reinforcing strip (13) enclosed by them and carrying a further plate-shaped part to which a further resistive film (20) is applied, and in that the further plate-shaped part (19), has its margins touching the reinforcing strips (11, 12, 13), is provided with slots (21, 22, 23).

2. Arrangement according to Claim 1, characterized in that a third plate-shaped part (25) is arranged on the side of the centre part (14) remote from the third reinforcing strip (13) and is separated from the centre part (14) by a further slot (28).

3. Arrangement according to Claim 2, characterized in that the further resistive film (19) serves as a temperature sensor and the third resistive film (25) serves to determine the flow direction.

4. Arrangement according to Claim 1, characterized in that films (32, 33, 34, 35) of low thermal conductivity are applied to the resistive film (8) and to the side of the substrate (1) remote from the resistive film in such a way that the local thermal-transfer coefficient between the flowing medium and the resistive film (8) is at least approximately constant in the flow direction.

5. Arrangement according to Claim 4, characterized in that the thickness of the films (32, 33) continuously decreases in the flow direction.

6. Arrangement according to Claim 4, characterized in that the thickness of the films (34, 35) gradually decreases in the flow direction.

**Revendications**

1. Dispositif pour la mesure de la vitesse d'écoulement de fluides, en particulier de l'air aspiré par des moteurs à combustion interne, ce dispositif comportant une couche résistante susceptible d'être chauffée électriquement, qui est appliquée tout en étant isolée sur un support et qui est en contact thermique avec le fluide en cours d'écoulement, le support ayant une forme rectangulaire et comportant une partie médiane (1) en forme de plaque portant la couche résistante (8) et étant muni, sur au moins trois côtés, de listels (2, 3, 4) de renfort formant une seule pièce avec lui, et la partie médiane (1) comportant sur ses bords des fentes (5, 6, 7) avoisinant les listels (2, 3, 4) de renfort, dispositif caractérisé en ce que deux listels (11, 12) de renfort dépassent au-delà d'un troisième listel (13) de renfort qu'ils enserrent, et portent une troisième partie en forme de plaque, sur laquelle une autre couche résistante (20) est appliquée, et en ce que l'autre partie (19) en forme de plaque est munie de fentes (21, 22, 23) sur ses bords qui avoisinent les listels (11, 12, 13) de renfort.

2. Dispositif selon la revendication 1, caractérisé en ce qu'une troisième partie (25) en forme de plaque est disposée sur le côté de la partie médiane (14) situé à l'opposé du troisième listel (13) de renfort et est séparée de la partie médiane (15) par une autre fente (28).

3. Dispositif selon la revendication 2, caractérisé en ce que l'autre couche résistante (19) sert de détecteur de température et en ce que la troisième couche résistante (25) sert à établir quel est le sens de l'écoulement (du fluide).

4. Dispositif selon la revendication 1, caractérisé en ce que sur la couche résistante (8) et sur le côté du support (1) situé à l'opposé de la couche résistante, des couches (32, 33, 34, 35) de faible conductibilité thermique sont déposées de façon telle que le coefficient local de conductibilité thermique entre le fluide en cours d'écoulement et la couche résistante (8) soit au moins approximativement constant dans le sens de l'écoulement.

5. Dispositif selon la revendication 4, caractérisé en ce que l'épaisseur des couches (32, 33) diminue de façon continue dans le sens de l'écoulement.

6. Dispositif selon la revendication 4, caractérisé en ce que l'épaisseur des couches (34, 35) diminue par degrés ou en gradins dans le sens de l'écoulement.

FIG.1

FIG.2

FIG.3

FIG.4